# EUROPÄISCHE PATENTSCHRIFT

(11) **EP 3 628 882 B1**
(45) Veröffentlichungstag und Bekanntmachung des Hinweises auf die Patenterteilung: **09.11.2022**
(21) Anmeldenummer: 19198840.1
(22) Anmeldetag: 23.09.2019
(51) Int. Cl.: F16C 33/66

(54) **MOTORFAHRZEUGRAD- ODER MOTORRADSCHWINGENWÄLZLAGERUNG**
MOTOR VEHICLE WHEEL OR MOTORCYCLE OSCILLATION ROLLER BEARING
PALIER À ROULEMENT OSCILLANT DE ROUE DE VÉHICULE AUTOMOBILE OU DE MOTOCYCLETTE

(30) Priorität: 26.09.2018 DE 102018216496
(43) Veröffentlichungstag der Anmeldung: 01.04.2020
(73) Patentinhaber: Aktiebolaget SKF, 415 50 Göteborg (SE)
(72) Erfinder: Kern, Henning, 97456 Dittelbrunn (DE); Emmert, Michael, 97647 Willmars (DE); Schmitz, Tom, 97421 Schweinfurt (DE)
(74) Vertreter: Kohl, Thomas

(56) Entgegenhaltungen:
- DE-A1-102013 210 523
- DE-U1-202016 103 442
- JP-A- 2006 125 482
- JP-A- 2008 215 418
- JP-A- 2008 215 419
- JP-A- 2015 101 631
- JP-A- 2015 121 276
- US-A1- 2014 363 113

## Beschreibung

Die Erfindung betrifft eine Motorfahrzeugradwälzlagerung eines Personenkraftwagens, eines Kleintransporters, eines Motorrads, eines (Elektro)Scooters, eines Quads oder eines Motorschlittens oder eine Motorradschwingenwälzlagerung.

Motorfahrzeugradwälzlagerungen finden sich beispielsweise bei Personenkraftwagen, insbesondere in der Ausbildung als zweireihige Schrägkugellager, bei Kleintransportern bis hin zu Lastkraftwagen, insbesondere in der Ausbildung als zweireihiges Kegelrollenlager, bei Off-Road- und Spezialfahrzeugen, bei Motorrädern, insbesondere in der Ausbildung als einreihige Rillenkugellager, bei (Elektro)Scootern, bei Quads, bei Motorschlitten, wobei es dort die mit den Ketten zusammenwirkenden Räder sind, und so weiter. Abhängig vom Einsatzgebiet sind diese Lagerungen mehr oder weniger starken Belastungen ausgesetzt, die von der Umwelt, aber auch vom Fahrzeug selbst ausgehen und die die Wälzlagergebrauchsdauer beeinflussen. Entsprechendes gilt für Motorradschwingenlagerungen .

Aus der US 2014 363113 A1 ist ein Wälzlager mit einem feststehenden und einem zum Drehen vorgesehenen Wälzlagerring und mit wenigstens einem zwischen den beiden Wälzlagerringen angeordneten, ein Schmiermittel aufnehmenden porösen Körper bekannt, wobei der poröse Körper mit dem zum Drehen vorgesehenen Wälzlagerring derart mechanisch gekoppelt ist, dass sich der poröse Körper bei einer Drehung des Wälzlagerrings im Wesentlichen mit diesem dreht, sodass der poröse Körper eine Menge des Schmiermittels aufgrund der Drehung abgibt.

Eine Aufgabe der vorliegenden Erfindung ist es daher, eine Motorfahrzeugrad- oder Motorradschwingenwälzlagerung zu schaffen, die eine verbesserte Gebrauchsdauer aufweist.

Die Aufgabe wird durch den Gegenstand des Anspruchs 1 gelöst. Vorteilhafte Ausgestaltungen sind in den Unteransprüchen beschrieben.

Einsatzbedingt, aber dann auch wieder stark mit dem jeweiligen Einsatzgebiet variierend, sind diese Wälzlagerungen mehr oder weniger starken Umwelteinflüssen wie Staub, Nässe, bis hin zu massiven Flüssigkeitseinflüssen, Schlamm und so weiter, aber auch vom Motor ausgehende Einflüssen wie z.B. Vibrationen, bei teils erheblichem Gewicht des Fahrzeugs ausgesetzt. Gegenüber einer vergleichbaren fettgeschmierten Wälzlagerung ersetzt der Schmierstoffspeicher sozusagen das Schmierfett, füllt nahezu den gesamten freien Innenraum der Wälzlagerung aus und umschließt die Wälzkörper und deren Käfige insbesondere vollständig. Durch das nahezu vollständige Ausfüllen ist damit gegenüber vergleichbaren fettgeschmierten Wälzlagerungen zwei- bis viermal mehr Schmieröl in der Wälzlagerung verfügbar, wobei durch den Schmierstoffspeicher gleichzeitig auch noch mit weiterem Vorteil eine gleichmäßige Verteilung des Schmieröls sichergestellt ist, was zusammen die Gebrauchsdauer der Wälzlagerung insbesondere bei vorgenannten Belastungen ganz deutlich erhöht. Dabei gibt es dann mit Vorteil natürlich auch keine Fettreibung mehr.

Bei der Ausbildung des Schmierstoffspeichers als ölimprägnierbare Polymermatrix verbleiben nach dem Einbringen des Polymerwerkstoffs in das Wälzlager nur sehr enge Zwischenräume hin zu den Wälzkörpern und den Oberflächen der Abrollflächenelemente. Der Polymerwerkstoff hat eine poröse Struktur mit Millionen mikroskopisch kleiner Poren, die das Öl durch die Oberflächenspannung zurückhalten. Bei Betrieb des Wälzlagers wird das Öl vom Polymerwerkstoff in die engen Zwischenräume zwischen ihm und den Lagerteilen abgelassen und sorgt so für eine effiziente Minimalmengenschmierung. Dadurch entsteht ein zusätzlicher Schutz vor dem Eindringen von Verunreinigungen in den eigentlichen Abrollbereich des Wälzlagers. Die enge Schmiegung zwischen der Polymerstruktur, den Wälzkörpern und Laufbahnen reduziert das Eindringen von Verunreinigungen ganz erheblich.

Der Schmierstoffspeicher macht die Schmierstoffeinbringung mit besonderem Vorteil auch ausspülungsfest. Weiterhin können sich von außen eindringende Flüssigkeiten nicht mit dem Öl oder Polymerwerkstoff mischen. Schmierstofflecks sind praktisch ausgeschlossen, da die Polymermatrix das Öl im Lager hält. Dichtungen im Lager erhöhen die Ölverweildauer in der Wälzlagerung noch zusätzlich.

Die Einbringung der Polymermatrix des Schmierstoffspeichers in die Wälzlagerung erfolgt beispielsweise in einem Spritzgussprozess, wobei nach dem Abkühlen des eingespritzten Polymers hin zu den Abrollbahnen der Abrollflächenelemente, den Wälzkörpern, deren Käfigen und so weiter nur ein minimaler Spalt verbleibt. Dadurch ist der freie Lauf der Wälzlagerung nicht beeinträchtigt. Der Reibwert und Leichtlaufeigenschaften werden nicht negativ beeinflusst. Auch sonstig befürchtete negative Auswirkungen durch den Einsatz des Schmierstoffspeichers als sozusagen zusätzliches, massebehaftetes mit umzuwälzendes Objekt konnten widerlegt werden. Im Polymergrundmaterial ist dabei bereits das Schmieröl enthalten. Es kann ein umweltfreundliches, hochwertiges und/oder oxidationsbeständiges Synthetiköl eingesetzt werden. Durch das fast vollständige Ausfüllen des Lagerinneren mit dem Schmierstoffspeicher können Wasser, Schmutzpartikel und ähnliche Verunreinigungen nicht wirklich in die Wälzlagerung eintreten. Die Wälzlager sind vor Verunreinigung und vorzeitigem Ausfall geschützt. Da dauerhaft mehr Schmierstoff im Bereich der Wälzkörper und der Abrollbahnen zur Verfügung steht, werden auch Stillstandschäden bzw. Schäden durch intensives Reinigen zuverlässig verhindert.

Zusätzlich unterstützt der Schmierstoffspeicher bei entsprechender Anordnung innerhalb der Wälzlagerung mit besonderem Vorteil auch Dichtungen der Wälzlagerung, wobei dies unabhängig davon gilt, ob schleifende Dichtungen oder nicht schleifend anliegende Dichtscheiben eingesetzt sind. Gegenüber einem konventionellen mit schleifenden oder berührungslosen Dichtungen ausgerüsteten Wälzlager ergibt sich durch das Vorhandensein des Schmierstoffspeichers benachbart zu den Dichtungen sozusagen eine physikalische bzw. mechanische Unterstützung für die Dichtungen, so dass ein nach innen Drücken beispielweise durch äußere Belastungen und damit ein Undichtwerden der Dichtungen sicher verhindert ist. Gegenüber einem konventionellen Wälzlager mit schleifend anliegenden Dichtungen tritt der weitere Vorteil hinzu, dass auch nach einem Abnutzen der schleifend anliegenden Dichtlippen, wodurch die schleifend anliegenden Dichtungen sozusagen zu berührungslosen Spaltdichtungen "mutieren", das Wälzlager durch den Schmierstoffspeicher weiterhin gegen äußere Einflüsse hinreichend geschützt bleibt.

Besagtes Unterstützen der Dichtungen durch den Schmierstoffspeicher bewirkt, dass selbst bei entsprechendem Druck von außen Verunreinigungen, wie Fremdpartikel und Wasser nicht in das Lager, insbesondere in Richtung Abrollbahnen vordringen können. Ferner ist ein Auswaschen des Schmierstoffs zusätzlich verhindert und damit das Korrosionsrisiko minimiert. Dies gilt insbesondere auch bei Reinigungseinflüssen auf die Wälzlagerung von außen, wobei lediglich exemplarisch das Reinigen mit einem Hochdruckstrahler mit Drücken bis zu 15 bar genannt sei. Chemische Reaktionen, Rostnarben und Spaltkorrosion und daraus möglicherweise resultierende Schälungen und Risse, die im schlimmsten Fall sogar die Sicherheit gefährden können, werden damit mit Vorteil verhindert, dies gilt auch für Rostbildung aufgrund des Kapillareffekts von ins Lager eindringendem Wasser, insbesondere bei Stillständen unter mäßig belüfteten Verhältnissen nach dem Reinigen.

Schließlich sind die Vorteile des Schmierstoffspeichereinsatzes sogar so weitreichend, dass konventionelle Lösungen mit schleifend anliegenden Dichtungen durch Lösungen mit nicht schleifend anliegenden Dichtscheiben plus Schmierstoffspeicher mit folgenden Vorteilen insbesondere bei Radlagerungen substituierbar sind. Es ist damit eine geringere Reibung erzielbar, wodurch wiederum höhere Geschwindigkeiten, geringere Antriebsenergieverbräuche und schnellere Beschleunigungen erzielbar sind, was nicht nur für die Nutzung im öffentlichen Straßenverkehr, aber auch für den Motorsport bedeutsam ist. Weiterhin besteht insbesondere auch ein Vorteil gegenüber fettgeschmierten Lagern, da normales Fett bei hohen Geschwindigkeiten seine Leitungsgrenzen erreicht, da hohe Geschwindigkeiten üblicher Weise höhere Temperaturen der Wälzlagerung bedingen, und beispielsweise eine bereits um 10° höhere Temperaturen die Fettgebrauchsdauer halbiert.

Weiterhin kann besagter Schmierstoffspeicher auch dann bevorzugt zum Einsatz kommen, wenn die Lagerstelle schwer zugänglich und eine Nachschmierung schwierig ist, oder wenn sie aggressiven Reinigungsmitteln widerstehen muss. Das Wälzlager wird durch das Einbringen des Schmierstoffspeichers praktisch wartungsfrei, so dass ein Nachschmieren hinfällig ist. Weil der Schmierstoffspeicher aufgrund des relativ großen Ölreservoirs im Lager zwei- bis viermal mehr Grundöl als ein Lager mit herkömmlicher Fettschmierung enthält, kann mit Vorteil komplett auf eine Nachschmierung verzichten werden.

Weitere Vorteile dieser Lösung sind, dass das Öl stets an der Einsatzstelle bleibt, es tritt nicht aus und verschmutzt seine Umgebung nicht. Die Polymermatrix ist umweltverträglich und ermöglicht die gleiche Tragzahl wie Standardlager.

Weitere Vorteile, Merkmale und Einzelheiten der Erfindung ergeben sich aus den im Folgenden beschriebenen Ausführungsbeispielen der Erfindung anhand der Figuren. Dabei zeigen:
Figuren 1 und 2 den oberen Bereich eines Längsschnitts durch Rillenkugellager,
Figur 3 den oberen Bereich eines Längsschnitts durch ein Schrägkugellager und
Figur 4 ausschnittsweise den oberen Bereich eines Längsschnitts durch eine Wälzlagerung eines Personenkraftwagenrads.

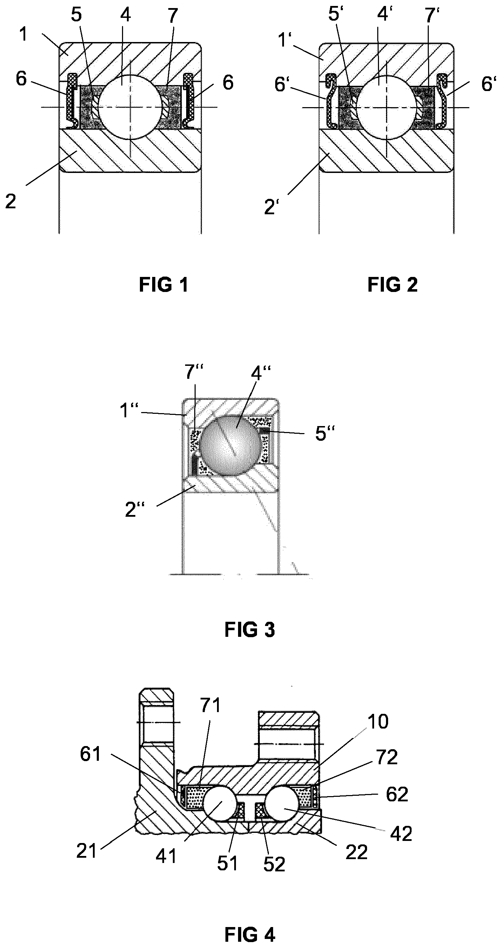

Die Figur 1 zeigt den oberen Bereich eines Längsschnitts durch ein Rillenkugellager, wie es zur Lagerung eines Motorradvorderrads, eines Motorradhinterrades oder einer Motorradschwinge erfindungsgemäß einsetzbar ist. Das Rillenkugellager umfasst ein äußeres Abrollflächenelement 1, das im hier gezeigten Ausführungsbeispiel ringförmig ist, und beispielsweise aus einem durch- oder einsatzgehärteten Wälzlager- oder Einsatzstahl ausgebildet ist. In anderen Ausführungsformen kann das äußere Abrollflächenelement 1 natürlich auch integraler Bestandteil eines Gehäuses und/oder aus anderen geeigneten Materialen ausgebildet sein. Weiterhin umfasst das Rillenkugellager ein inneres Abrollflächenelement 2, für das das vorausgehend zum äußeren Abrollflächenelement 1 Beschriebene entsprechend gilt, so dass zum Beispiel das innere Abrollflächenelement 2 auch integraler Bestandteil einer Welle sein kann. Zwischen den Abrollflächenelementen 1 und 2 ist ein Satz von kugelförmigen Wälzkörpern 4 angeordnet, die auf den Abrollbahnen des inneren und äußeren Abrollflächenelements 2 und 1 zum Abrollen vorgesehen sind, so dass über die Wälzkörper 4 die Abrollflächenelemente 1 und 2 gegeneinander nach Art eines Wälzlagers verschwenkbar bzw. drehbar sind. Die Kugeln 4 sind dabei aus dem gleichen Material wie das innere und/oder äußere Abrollflächenelement 2 und 1 ausgebildet, können aber auch aus anderen geeigneten Materialen, beispielsweise einer Keramik ausgebildet sein. Dabei sind die Wälzkörper 4 in einem Käfig 5 angeordnet und ggf. gehalten, der ein gegenseitiges Berühren der Wälzkörper 4 unterbindet. Der Käfig 5 ist aus einem geeigneten Material beispielsweise einer Metalllegierung oder Kunststoff ausgebildet.

Der die Wälzkörper 4 beinhaltende Raum zwischen dem äußeren und inneren Abrollflächenelement 1 und 2 ist dabei nach außen hin durch in das Wälzlager integrierte Dichtungen 6 abgedichtet, wobei die scheibenartig ausgebildeten Dichtungen 6 im äußeren Abrollflächenelement 1 beispielsweise durch ein Einschnappen in eine entsprechende Rille gehalten sind, und innen mit einer Dichtlippe nach Art einer berührenden Dichtung am inneren Abrollflächenelement 2 berührend anliegen. Der neben den Wälzkörpern 4 und dem Käfig 5 zwischen dem äußeren und inneren Abrollflächenelement 1 und 2 sowie zwischen den Dichtungen 6 verbleibende Raum ist vom Schmierstoffspeicher 7 zu einem Anteil von größer 80% ausgefüllt. In anderen Ausführungsformen, auch in Abhängigkeit vom jeweiligen Dichtungsdesign sind auch Ausfüllungen größer 90% bis hin zu 95%, 97% oder auch nahe an die 100% möglich.

Der Schmierstoffspeicher 7 ist dabei fensterkäfigartig ausgebildet, wobei zwei Seitenringe mit mehreren sich jeweils zwischen zwei benachbarten Kugeln 4 ersteckenden Stegelementen verbunden sind. Der Schmierstoffspeicher 7 ist dabei einstückig und materialeinheitlich ausgebildet und ist dann beispielsweise durch einen Einspritzprozess in das fertig zusammengesetzte Rillenkugellager, umfassend die Abrollflächenelemente 1 und 2, die Kugeln 4 und den Käfig 4, aber noch vor dem Einsetzen der Dichtungen 6 erzeugt. Damit ist der Schmierstoffspeicher 7 den Käfig 5 umschließend und sich an die Kugeln 4 sowie an die entsprechenden Oberflächen der Abrollflächenelement 1 und 2 anschmiegend ausgebildet. In anderen Ausführungen kann der Schmierstoffspeicher 7 natürlich auch anders erzeugt sein, z.B. außerhalb des Lagers vorgefertigt sein. Prinzipiell kann auch eine lediglich kammkäfigartige Ausbildung des Schmierstoffspeichers angezeigt sein. Ferner kann der Seitenring bzw. können die Seitenringe auch einfach oder mehrfach geschlitzt ausgebildet sein und/oder sich Stegelemente nicht zwischen allen benachbarten Wälzkörperpaarungen erstrecken, so dass der Schmierstoffspeicher auch mehrstückig bzw. mehrteilig sein kann.

Der Schmierstoffspeicher 7 ist dabei aus einer mit einem Schmieröl imprägnierbaren Polymermatrix ausgebildet.

Die Figur 2 zeigt den oberen Bereich eines Längsschnitts durch ein weiteres Rillenkugellager, wie es zur Lagerung eines Motorradvorderrads, eines Motorradhinterrades oder einer Motorradschwinge erfindungsgemäß einsetzbar ist. Dabei unterscheidet sich das Rillenkugellager der Figur 2 von dem der Figur 1 lediglich dadurch, dass anstelle der ins Lager integrierten berührenden Dichtungen 6 nunmehr Dichtspalte ausbildende Dichtscheiben 6' eingesetzt sind. Ansonsten gilt das vorausgehend zum Rillenkugellager der Figur 1 Beschrieben entsprechend, wobei vergleichbare Bauelemente mit gleichen Bezugszeichennummern ergänzt um einen Hochstrich bezeichnet sind.

In anderen Ausführungsformen können die Lager der Figuren 1 und 2, beispielsweise beim gepaarten Einsatz auch mit lediglich einer Dichtung 6 oder 6' ausgebildet sein. In wiederum einer anderen, nicht dargestellten Ausführungsform können Lager entsprechend den Figuren 1 und 2 auch ganz ohne Dichtungen 6 und 6' eingesetzt werden, was beispielsweise dann sinnvoll sein kann, wenn die Abdichtung als solche nicht mit ins Lager integrierten Dichtungen, sondern außerhalb der eigentlichen Lager, beispielweise an Umbauteilen der Lager realisiert ist.

Die Figur 3 zeigt den oberen Bereich eines Längsschnitts durch ein Schrägkugellager, wie es insbesondere im Zusammenspiel mit einem weiteren Schrägkugellager in X- oder O-Anordnung zur Lagerung eines Personenkraftwagenrads erfindungsgemäß einsetzbar ist. Prinzipiell gilt dabei das vorausgehend zu den Lagern der Figuren 1 und 2 Beschriebene hier entsprechend, so dass vergleichbare Bauelemente mit gleichen Bezugszeichennummern ergänzt um zwei Hochstriche bezeichnet sind. Anders als bei den Figuren 1 und 2 ist das Schrägkugellager der Figur 3 ohne Dichtungen ausgebildet, so dass die oben bezeichneten Prozentwerte zur Raumausfüllung durch den Schmierstoffspeicher 7" beim Schrägkugellager der Figur 3 für den die Wälzkörper 5" beinhaltenden Raum gelten, der dadurch entsteht, dass man sich sozusagen im Sinne einer Einhüllenden der beiden Abrollflächenelemente 1" und 2" eine die jeweiligen Stirnseiten der Abrollflächenelemente 1" und 2" verbindende Linie, insbesondere eine Gerade vorstellt. Bei einer derartigen Ausbildung ohne Dichtungen erfolgt die Abdichtung dann in der Regel in oder an das Schrägkugellager umgebenden oder daran angrenzenden weiteren Bauelementen, die als Dichtungsträger und als Gegenfläche fungieren. In anderen Ausführungsformen kann das Schrägkugellager der Figur 3 wie zu den Figuren 1 und 2 beschrieben natürlich auch mit dort gezeigten ins Lager integrierten Dichtungen beidseitig, oder wie ebenfalls oben beschrieben lediglich einseitig bestückt sein.

In anderen Ausführungsformen können anstelle der dargestellten Rillen- und Schrägkugellager, natürlich auch andere Kugellager, beispielsweise Drei- oder Vierpunktkugellager zum Einsatz kommen und/oder auch mehrreihige Wälzlager.

Die Figur 4 zeigt ausschnittsweise den oberen Bereich eines Längsschnitts durch eine Wälzlagerung eines nicht angetriebenen Personenkraftwagenrads. Die Radlagerung umfasst dabei ein Außenteil 10, das zum festen Verbinden mit der Fahrzeugkarosserie vorgesehen ist und das als äußeres Abrollflächenelement die beiden äußeren Abrollbahnen für die linke und rechte Reihe von Kugeln 41 und 42 des zweireihigen Schrägkugellagers bildet. Ein erstes Innenteil 21 der Radlagerung bildet dabei als Abrollflächenelement die innere Abrollbahn für die linke Reihe von Kugeln 41. Weiterhin ist das erste Innenteil 21 einen Flansch ausbildend gestaltet, an dem ein Radfelge zum daran Anschrauben vorgesehen ist. Die Radlagerung umfasst ein zweites Innenteil 22, das als Abrollflächenelement die innere Abrollbahn für die rechte Reihe von Kugeln 42 bildet. Das erste und das zweite Innenteil 21 und 22 sind dabei in nicht dargestellter Weise nach einem der bekannten Lösungen fest miteinander verbunden. Die linke und die rechte Reihe von Kugeln 41 und 42 sind dabei in an sich bekannter Art und Weise in jeweils einem eigenen Käfig 51 und 52 angeordnet.

Im nicht zum Rotieren vorgesehenen Außenteil 10 sind Dichtscheiben 61 und 62 befestigt, die gegenüber den zum Rotieren vorgesehenen Innenteilen 21 und 22 jeweils einen ringförmigen Dichtspalt ausbildend gestaltet sind. Unmittelbar benachbart zu den Dichtscheiben 61 und 62, bzw. von außen gesehen unmittelbar hinter den Dichtscheiben 61 und 62 sind Schmierstoffspeicher 71 und 72 angeordnet. Für jede der beiden Reihen von Kugel 41 und 42 ist dabei ein eigenen Schmierstoffspeicher 71 und 72 vorgesehen, wobei jeder der Schmierstoffspeicher 71 und 72 kammkäfigartig, die jeweilige Reihe von Kugeln 41 bzw. 42 umschließend ausgebildet ist. Insbesondere das vorausgehend zu den Schmierstoffspeichern 7, 7' und 7" der Figuren 1 bis 3 Ausgeführte gilt für die Schmierstoffspeicher 71 und 72 entsprechend. Wie bereits eingangs beschrieben ergeben sich mit dieser Lösung gegenüber vergleichbaren Lösungen ohne Schmierstoffspeicher, aber mit schleifend anliegenden Dichtungen die eingangs beschriebenen Vorteile.

Natürlich sind die Schmierstoffspeicher in anderen Ausführungen auch bei Radlagerungen mit schleifenden Dichtungen mit Vorteil einsetzbar.

## Patentansprüche

1. Motorfahrzeugradwälzlagerung eines Personenkraftwagens, eines Kleintransporters, eines Motorrads, eines (Elektro)Scooters, eines Quads oder eines Motorschlittens oder Motorradschwingenwälzlagerung, umfassend folgende Merkmale:
- ein äußeres Abrollflächenelement,
- ein inneres Abrollflächenelement,
- ein zwischen den Abrollflächenelementen angeordneter Satz von Wälzkörpern, so dass die Abrollflächenelemente gegeneinander nach Art eines Wälzlagers wenigstens verschwenkbar sind,
- ein wenigstens kammkäfigartig ausgebildeter Schmierstoffspeicher zum Speichern und Abgeben eines Schmierstoffs mit sich zwischen den Wälzkörpern erstreckenden Stegelementen und einem die Stegelemente verbindenden Seitenring,
- zusätzlich zu dem Schmierstoffspeicher ein vom Schmierstoffspeicher materialunterschiedlicher Wälzlagerkäfig, wobei der Schmierstoffspeicher wenigstens Abschnitte des Wälzlagerkäfigs wenigstens teilweise umschließend ausgebildet ist, und
- die Wälzkörper sind Kugeln.

2. Motorfahrzeugrad- oder Motorradschwingenwälzlagerung nach Anspruch 1, wobei der Schmierstoffspeicher auf der dem Seitenring gegenüberliegenden Seite mit einem weiteren Seitenring fensterkäfigartig ausgebildet ist.

3. Motorfahrzeugrad- oder Motorradschwingenwälzlagerung nach einem der Ansprüche 1 oder 2, wobei der Schmierstoffspeicher hin zu den Wälzkörpern und Abrollflächenelementen mit einem vorgebbaren Spiel ausgebildet ist, und ansonsten die Stegelemente die Zwischenräume zwischen den Wälzkörpern, abgesehen vom Wälzlagerkäfig, ausfüllen und/oder der Seitenring zusammen mit den Abrollflächenelementen auf der Seitenringseite die Wälzkörper nach außen hin abschirmt.

4. Motorfahrzeugrad- oder Motorradschwingenwälzlagerung nach einem der Ansprüche 1 bis 3, wobei der die Wälzkörper beinhaltende Raum wenigstens zu einer der Seiten hin nach außen durch eine zwischen den Abrollflächenelementen wirkende Dichtung abgedichtet ist, wobei insbesondere die Dichtung als berührende oder einen Spalt ausbildende Dichtung ausgebildet ist.

5. Motorfahrzeugrad- oder Motorradschwingenwälzlagerung nach Anspruch 4, wobei die Wälzlagerung beidseitig mit Dichtungen versehen ist und der zwischen den Dichtungen verbleibende Raum neben den Wälzkörpern und dem Käfig zu einem Anteil von größer 80%, oder größer 90% bis hin zu 95%, 97% oder nahezu vollständig vom Schmierstoffspeicher erfüllt ist.

6. Motorfahrzeugrad- oder Motorradschwingenwälzlagerung nach einem der Ansprüche 1 bis 3, wobei der die Wälzkörper beinhaltende Raum wenigstens zu einer der Seiten hin nach außen frei von einer Dichtung oder Abschirmung ist, wobei insbesondere die Wälzlagerung an beiden Seiten frei von einer zwischen den Abrollflächenelementen integrierten Dichtung oder Abschirmung ist, die Abrollflächenelemente ringartig ausgebildet sind und eine Einhüllende der beiden ringförmigen Abrollflächenelemente einen zwischen den Abrollflächenelementen verbleibende Raum definiert, der neben den Wälzkörpern und dem Käfig zu einem Anteil von größer 80%, oder 90% bis hin zu 95%, 97% oder auch nahezu vollständig vom Schmierstoffspeicher erfüllt ist.

7. Motorfahrzeugrad- oder Motorradschwingenwälzlagerung nach einem der Ansprüche 1 bis 6, wobei der Schmierstoffspeicher feinporös und/oder schwammartig ausgebildet ist.

8. Motorfahrzeugrad- oder Motorradschwingenwälzlagerung nach einem der Ansprüche 1 bis 7, wobei der Schmierstoffspeicher aus einer Polymermatrix ausgebildet ist und/oder wobei der Schmierstoff ein bei Raumtemperatur flüssiger Schmierstoff, insbesondere ein Schmieröl ist.

## Claims

1. Motor vehicle wheel anti-friction bearing of a passenger car, a van, a motorcycle, an (electric) scooter, a quad bike or a snowmobile or motorcycle swing arm anti-friction bearing, comprising the following features:
- an outer rolling surface element,
- an inner rolling surface element,
- a set of rolling bodies arranged between the rolling surface elements, with the result that the rolling surface elements can be at least pivoted with respect to one another in the manner of an anti-friction bearing,
- a lubricant reservoir of at least comb-type cage-like configuration for storing and outputting a lubricant with web elements which extend between the rolling bodies, and with a side ring which connects the web elements,
- in addition to the lubricant reservoir, an anti-friction bearing cage made from a different material from the lubricant reservoir, the lubricant reservoir being configured so as to at least partially enclose at least portions of the anti-friction bearing cage, and
- the rolling bodies are balls.

2. Motor vehicle wheel or motorcycle swing arm anti-friction bearing according to Claim 1, the lubricant reservoir being configured in a window cage-like manner with a further side ring on the side which lies opposite the side ring.

3. Motor vehicle wheel or motorcycle swing arm anti-friction bearing according to either of Claims 1 or 2, the lubricant reservoir being configured with a predefinable play towards the rolling bodies and rolling surface elements, and the web elements otherwise filling the intermediate spaces between the rolling bodies, apart from the anti-friction bearing cage, and/or the side ring together with the rolling surface elements shielding the rolling bodies towards the outside on the side ring side.

4. Motor vehicle wheel or motorcycle swing arm anti-friction bearing according to one of Claims 1 to 3, the space which contains the rolling bodies being sealed to the outside at least towards one of the sides by way of a seal which acts between the rolling surface elements, the seal being configured, in particular, as a rubbing seal or a seal which configures a gap.

5. Motor vehicle wheel or motorcycle swing arm anti-friction bearing according to Claim 4, the anti-friction bearing being provided with seals on both sides, and the space which remains between the seals being filled by, in addition to the rolling bodies and the cage, the lubricant reservoir to a proportion of greater than 80%, or greater than 90% up to 95%, 97% or almost completely.

6. Motor vehicle wheel or motorcycle swing arm anti-friction bearing according to one of Claims 1 to 3, the space which contains the rolling bodies being free of a seal or shield to the outside at least towards one of the sides, the anti-friction bearing being free, in particular, on both sides of a seal or shield which is integrated between the rolling surface elements, the rolling surface elements being of ring-like configuration, and an envelope of the two annular rolling surface elements defining a space which remains between the rolling surface elements and is filled by, in addition to the rolling bodies and the cage, the lubricant reservoir to a proportion of greater than 80%, or 90% up to 95%, 97% or even almost completely.

7. Motor vehicle wheel or motorcycle swing arm anti-friction bearing according to one of Claims 1 to 6, the lubricant reservoir being of finely porous and/or sponge-like configuration.

8. Motor vehicle wheel or motorcycle swing arm anti-friction bearing according to one of Claims 1 to 7, the lubricant reservoir being configured from a polymer matrix, and/or the lubricant being a lubricant which is liquid at room temperature, in particular a lubricating oil.

## Revendications

1. Palier à roulement de roue de véhicule automobile d'une voiture particulière, d'une fourgonnette, d'une motocyclette, d'un scooter (électrique), d'un quad ou d'un traîneau à moteur ou palier à roulement oscillant de motocyclette, comprenant les caractéristiques suivantes :
- un élément de surface de roulement extérieur,
- un élément de surface de roulement intérieur,
- un ensemble de corps de roulement disposé entre les éléments de surface de roulement, de sorte que les éléments de surface de roulement soient au moins pivotants les uns par rapport aux autres à la manière d'un palier à roulement,
- un réservoir de lubrifiant réalisé au moins en forme de cage à doigts pour stocker et distribuer un lubrifiant, comportant des éléments jointifs s'étendant entre les corps de roulement et une bague latérale reliant les éléments jointifs,
- en plus du réservoir de lubrifiant, une cage de palier à roulement de matériau différent du réservoir de lubrifiant, le réservoir de lubrifiant étant réalisé de manière à entourer au moins partiellement au moins des parties de la cage de palier à roulement, et
- les corps de roulement sont des billes.

2. Palier à roulement de roue de véhicule automobile ou palier à roulement oscillant de motocyclette selon la revendication 1, le réservoir de lubrifiant étant réalisé en forme de cage à fenêtre avec une autre bague latérale sur le côté opposé à la bague latérale.

3. Palier à roulement de roue de véhicule automobile ou palier à roulement oscillant de motocyclette selon l'une des revendications 1 ou 2, le réservoir de lubrifiant étant réalisé avec un jeu pouvant être prédéfini vers les corps de roulement et les éléments de surface de roulement, et autrement les éléments jointifs remplissant les espaces intermédiaires entre les corps de roulement, mise à part la cage de palier à roulement, et/ou la bague latérale protégeant les corps de roulement vers l'extérieur du côté de la bague latérale conjointement avec les éléments de surface de roulement.

4. Palier à roulement de roue de véhicule automobile ou palier à roulement oscillant de motocyclette selon l'une des revendications 1 à 3, l'espace contenant les corps de roulement étant rendu étanche vers l'un des côtés vers l'extérieur par un joint d'étanchéité agissant entre les éléments de surface de roulement, en particulier le joint d'étanchéité étant réalisé sous forme de joint d'étanchéité à contact ou formant un interstice.

5. Palier à roulement de roue de véhicule automobile ou palier à roulement oscillant de motocyclette selon la revendication 4, le palier à roulement étant doté de joints d'étanchéité des deux côtés et l'espace restant entre les joints d'étanchéité, en plus des corps de roulement et de la cage, étant rempli par le réservoir de lubrifiant dans une proportion de plus de 80%, ou de plus de 90% jusqu'à 95%, 97% ou pratiquement complètement.

6. Palier à roulement de roue de véhicule automobile ou palier à roulement oscillant de motocyclette selon l'une des revendications 1 à 3, l'espace contenant les corps de roulement étant dépourvu d'un joint d'étanchéité ou d'une protection au moins vers l'un des côtés vers l'extérieur, en particulier le palier à roulement étant dépourvu d'un joint d'étanchéité ou d'une protection intégré(e) entre les éléments de surface de roulement, les éléments de surface de roulement étant réalisés de manière annulaire et une enveloppe des deux éléments de surface de roulement annulaires définissant un espace restant entre les éléments de surface de roulement, lequel espace, en plus des corps de roulement et de la cage, est rempli par le réservoir de lubrifiant dans une proportion de plus de 80%, ou de 90% jusqu'à 95%, 97% ou aussi pratiquement complètement.

7. Palier à roulement de roue de véhicule automobile ou palier à roulement oscillant de motocyclette selon l'une des revendications 1 à 6, le réservoir de lubrifiant présentant une porosité fine et/ou étant réalisé en forme d'éponge.

8. Palier à roulement de roue de véhicule automobile ou palier à roulement oscillant de motocyclette selon l'une des revendications 1 à 7, le réservoir de lubrifiant étant réalisé à partir d'une matrice polymère et/ou le lubrifiant étant un lubrifiant liquide à température ambiante, en particulier une huile lubrifiante.
